# EUROPEAN PATENT APPLICATION

(11) **EP 2 288 111 A1**
(43) Date of publication of application: **23.02.2011**
(21) Application number: 09251974.3
(22) Date of filing: 11.08.2009
(51) Int. Cl.: H04L 29/08

(54) **Managing client requests for data**

(71) Applicant: Zeus Technology Limited, Cambridge CB4 0WS (GB)
(72) Inventor: Garrett, Owen John, Ely, Cambridgeshire CB6 3RH (GB); Conlon, Declan Sean, Cambridge CB1 2PY (GB); Horney, Matthew Morgan, Cambridge CB4 1QQ (GB)
(74) Representative: Atkinson, Ralph

(57) **Abstract**

Network traffic is distributed between a plurality of networked computers. The traffic comprises requests that are received into the network and replicated to each computer. For each request, each computer makes a decision based on attributes of the request as to whether to process or ignore the request, such that each request is processed by only one computer. Each computer periodically broadcasts a signal to each of the other computers to confirm that it is online. When a first computer is no longer online, the traffic is redistributed amongst the remaining online computers, wherein traffic that is already processed by the remaining computers is not redistributed, traffic that would have been processed by the first computer is split evenly between the remaining computers, and each computer decides independently and identically how to redistribute the traffic without communicating with the other computers.

## Description

### BACKGROUND OF THE INVENTION

### 1. Field of the Invention

The present invention relates to a method of distributing network traffic between a plurality of networked computers.

### 2. Description of the Related Art

Many situations arise in which a very large number of clients, possibly browsing the Internet, require access to a particular data source, such as a highly popular website. In order to serve data to many clients of this type, it known to make the data available from many servers acting as a collection with traffic management systems being used to even out loading in an attempt to optimise the available functionality.

However, it is also necessary that the traffic managers (also referred to as load balancers) also have even load balancing so that client requests may be served as quickly as possible. To solve this problem, it is known to have a plurality of IP addresses, each of which is monitored by a different traffic management system. Requests are allocated randomly to the available IP addresses, meaning that the load is spread evenly. However, in an environment of this type, problems may occur if traffic managers become inoperative. A typical solution is that when one traffic manager fails, another takes over monitoring its IP address, meaning that one traffic manager is now processing twice the amount of traffic as the others. Should that traffic manager fail in turn, which is possible given the extra load, a third traffic manager will have to deal with three times as much traffic as the remaining traffic managers.

Further issues with multiple IP addresses are that they are a limited resource, and that it is preferable to present a single point of entry to clients.

### BRIEF SUMMARY OF THE INVENTION

According to an aspect of the present invention, there is provided a method according to claim 1.

### BRIEF DESCRIPTION OF THE SEVERAL VIEWS OF THE DRAWINGS

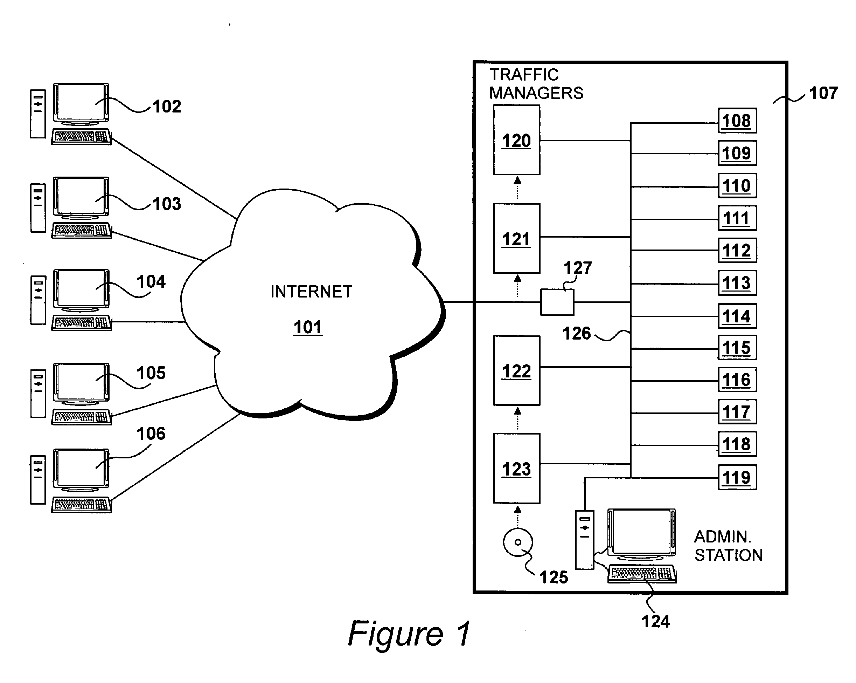

*Figure 1* shows an environment suitable for embodying the invention;
*Figure 2* shows the internal components of a traffic manager shown in *Figure 1*;
*Figure 3* details steps carried out by the traffic manager shown in *Figure 2*;
*Figure 4* illustrates the contents of the memory shown in *Figure 2*;
*Figure 5* is an illustration of request handling by the traffic managers shown in *Figure 1*;
*Figure 6* is an illustration of how traffic is redistributed between online traffic managers;
*Figure 7* details steps carried out in *Figure 3* to determine responsibility for a request;
*Figure 8* gives examples of the responsibilities table shown in *Figure 4**;*
*Figure 9* details steps carried out in *Figure 7* to calculate a responsibilities table;
*Figure 10* illustrates how buckets are distributed between online traffic managers; and
*Figure 11* illustrates

### DESCRIPTION OF THE BEST MODE FOR CARRYING OUT THE INVENTION

### Figure 1

The following embodiment is described with respect to accessing data over the Internet, although it should be appreciated that the techniques involved have applications in other networked environments.

The Internet is illustrated at 101 and receives requests from many browsing clients, a small number of which are illustrated as browsing clients **102** to **106.**

A service provider **107** includes servers **108** to **119,** traffic managers **120** to **123,** an administration station **124,** traffic manager instructions encoded onto a CD-ROM **125** or similar data carrying medium, and an internal network **126** and a router **127.**

In this example, the service provider **107** has a single URL and is configured to provide information from a popular website to a significantly large number of browsing clients. A domain name server (DNS) on the Internet associates this URL with a single IP address. When a browsing client wishes to access the website a request is sent to this IP address which is received by router **127.** Router **127** replicates this request to each of the traffic managers **120** to **123.** Each traffic manager then makes a decision about whether or not it is responsible for this request. Only one traffic manager is responsible for each requst, and that traffic manager processes it. Every other traffic manager drops the request, not even acknowledging it. By ensuring an even spread of responsibility across the traffic managers, the load on the traffic managers is distributed evenly.

Each traffic manager, such as traffic manager **120,** receives a client request (an HTTP request) and analyses it, in part or completely, in order to decide which server **108** to **119** to convey the request to. It may decide this according to several criteria. For example, it may wish to simply spread the load, in which case it will choose the least loaded server. Traffic management, however, usually involves selecting servers on the basis of their functionality. In such a scenario, servers are grouped into pools. A first pool may serve static web pages, a second pool may serve dynamic content and a third pool may serve secured data over an HTTPS connection. The traffic manager **120** chooses which to access, based upon the type of request. Thus, this additional functionality may be considered as identifying the difference between traffic management compared to basic load balancing.

The administration station is used to remotely configure the traffic managers and the servers, such that it is not necessary to provide the traffic managers and servers with an output monitor or a keyboard input etc. Consequently, these systems have a hardware implementation that consists of a one- or two-unit rack mounted device connected to a network. The administration station is also used for installing instructions, including server instructions and traffic managing instructions.

The CD-ROM **125** containing traffic managing instructions may be loaded directly onto the traffic managers **120** to **123** if they have CD-ROM drives, or instructions from the CD-ROM can be installed from the CD-ROM drive of the administration station **124** via the network **126** onto the traffic managers **120** to **123.**

In the present embodiment, service requests are managed in a system having many servers for serving clients in response to one address, under the supervision of a set of traffic managers, whereby each request is handled by only one traffic manager. Each of the traffic managers is configured such that firstly it intermittently transmits its availability to the other traffic managers. Secondly, it identifies a change in the availability of the other traffic managers in the set. Thirdly, it modifies its responsibilities for traffic in response to the identified change of availability. In this way, it is possible to balance incoming service requests against the availability of the traffic managers.

This system would be suitable for any environment where a network of computers services incoming client requests. In this embodiment the computers are traffic managers, but in other embodiments they could be computers having other functions, provided that each computer is configured to process a request in an identical way.

Each traffic management system, in this embodiment, issues a multicast on a periodic basis informing the other traffic management systems to the effect that the traffic management system is online. In this example, online means available for use. A traffic manager may go offline because of a crash or simply because it is overworked and does not have enough memory to issue the multicast. Failure to receive a multicast in this way identifies to the other servers that availability has been lost. Each then independently determines its responsibility for incoming requests, without resort to central information and without negotiating with the other traffic managers.

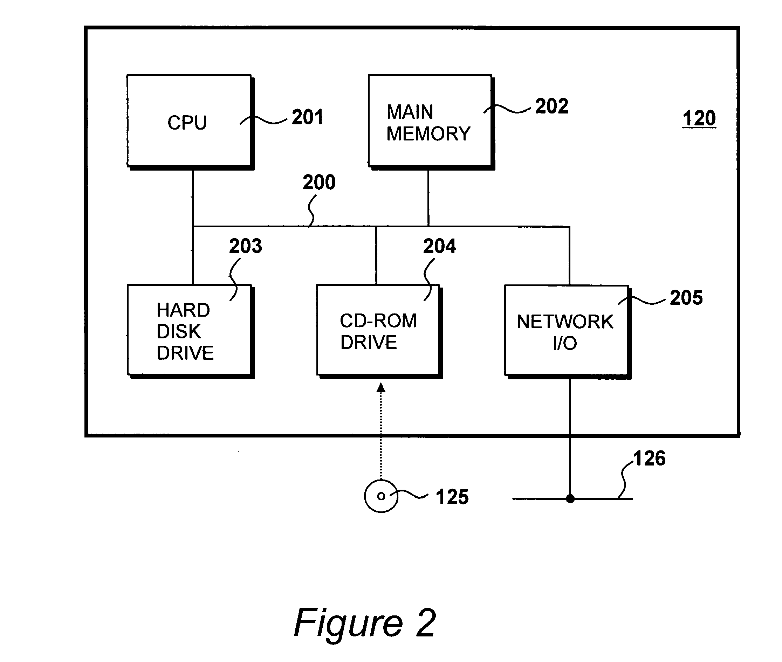

Details of the hardware configuration for a specific traffic manager **120** is illustrated in *Figure 2**.*

### Figure 2

All traffic managers **120** to **123** are substantially the same, and the servers **108** to **119** are similarly configured.

Internally, components of the traffic manager communicate over a system bus **200.** The central processing unit **201** may be a Pentium 6 running at 5.2 gigahertz and includes on-chip primary and secondary cache, to facilitate access to frequently used instructions and data.

A main memory **202** provides, for example, 2 gigabytes of dynamic RAM, in which instructions and data are stored for regular access while the system is operating. A hard disk drive **203** provides typically 60 gigabytes of non-volatile storage of instructions and configuration data. The disk 203 also provides storage for infrequently accessed data, such as configuration files, that are loaded into main memory when the system is initialised.

In this example, a CD-ROM drive **204** is shown which, as previously stated, is configured to receive the data carrying medium, such as a CD-ROM, so as to facilitate the loading of instructions for implementing the traffic management functionality. Communication to network **126** is provided via a network interface card **205.**

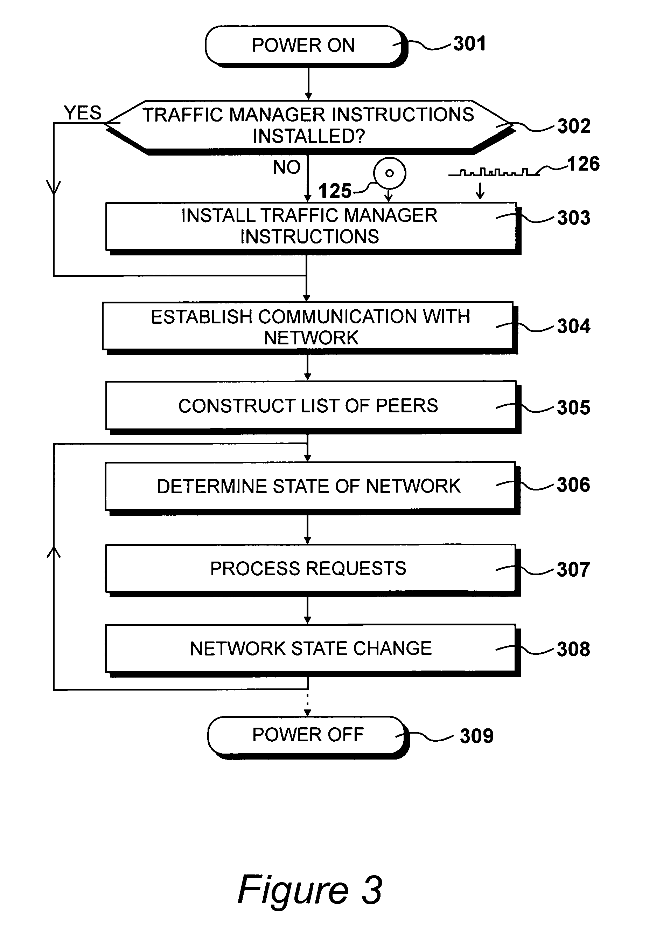

Procedures for implementing operation of the system are illustrated in *Figure 3**.*

### Figure 3

At step **301** traffic manager **120** is powered on and at step **302** a question is asked as to whether the traffic manager instructions are installed. If the traffic manager is new on the network this question will be answered in the negative and instructions are installed at step **303,** for example from a computer-readable medium such as CD ROM **125** or from the network **126.**

Following this, and if the question asked at step **302** is answered in the affirmative, then at step **304** the traffic manager **120** establishes communication with its peers, ie the network of traffic managers comprising traffic managers **121, 122,** and **123.** This includes setting up a multicast MAC address so that the router can multicast an incoming request to all the traffic managers' MAC addresses. In this step, the computer constructs a MAC address from a particular IP address, and informs router **127** that this MAC address should be used for multicasts of the IP address. Thus when a request arrives for that IP address, the router is aware of which MAC addresses to multicast it to.

Information is available from router **127** regarding the total number of active traffic managers on the network, and thus at step 305 the traffic manager constructs a list of its peers. This is an ordered list, in this embodiment alphabetically, and each traffic manager holds an identically ordered list.

At step **306** traffic manager **120** determines the state of the network, i.e. which of its peers are online. This is done by listening for multicasts from the other traffic managers, sent twice a second, indicating that they are online. In turn, traffic manager **120** multicasts twice a second that it is online. In this way each traffic manager is continually aware of the online availability of its peers. These twice-α-second multicasts are called heartbeats. In other embodiments they may be sent at a different regular interval.

At step **307** the traffic manager processes incoming requests until a network state change, ie a traffic manager going offline or returning online, at step **308** provides an interrupt, after which control is returned to step **306** and the state of the network is determined.

Steps **306, 307** and **308** are continued until the traffic manager is powered off, either intentionally for maintenance or due to a systems crash.

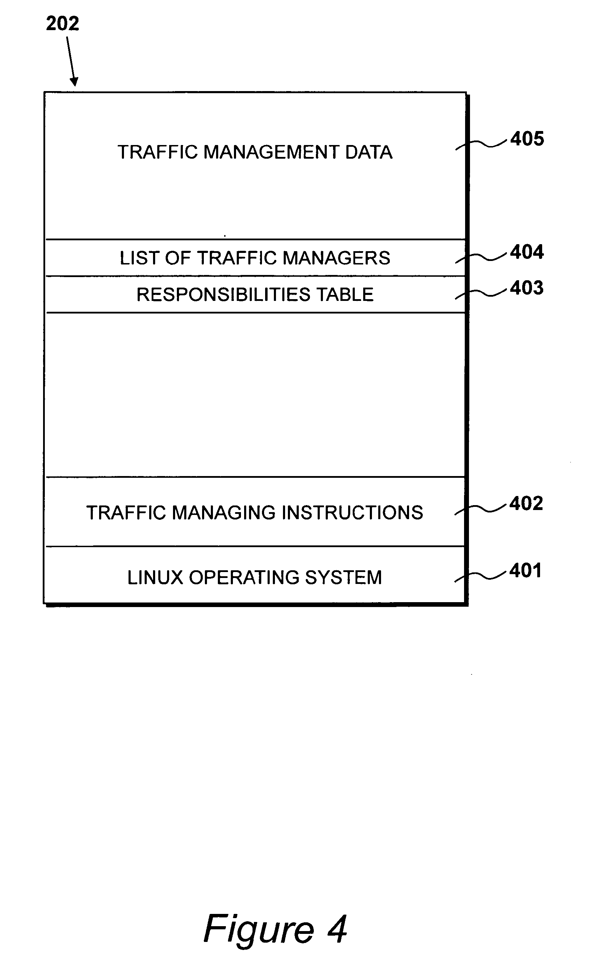

A mapping of instructions and data held within main memory **202,** when operational, is illustrated in *Figure 4**.*

### Figure 4

As part of the loading process an operating system, such as Linux® or an alternative, is loaded at **401.**

The traffic managing instructions themselves are loaded at **402.** A responsibilities table is illustrated as being located at **403** and the list of traffic managers created at step **305** is held at location **404.** Location **405** provides space for the storage of traffic management data.

### Figure 5

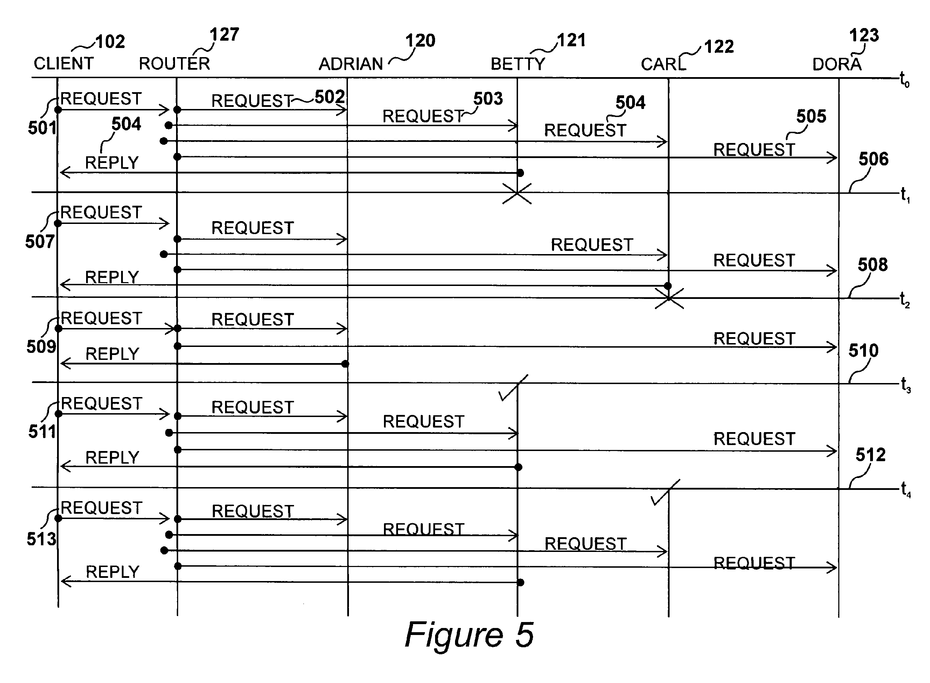

*Figure 5* illustrates a handling of requests by traffic managers **120** to **123.** In this example, each traffic manager has been given a name. Thus traffic manager **120** is named Adrian, traffic manager **121** is named Betty, traffic manager **122** is named Carl, and traffic manager **123** is named Dora. The alphabetical list of traffic managers therefore comprises traffic managers **120, 121, 122** and **123** in that order.

At time t₀, indicated at **500,** all the traffic managers are online. A client request **501** is received from client **102** at router **127.** This request is then multicast to traffic manager **120** as request **502,** to traffic manager **121** as request **503,** to traffic manager **122** as request **504,** and to traffic manager **123** as request **505.** Each traffic manager consults its responsibilities table **403** and traffic manager **121** determines that it is responsible for this request. It therefore sends reply **504.** Each of traffic managers **120, 122** and **123** determines that it is not responsible for the request and ignores it.

At time t₁, indicated at **506,** traffic manager **121** suffers a failure. Traffic managers **120, 122** and **123** fail to receive a heartbeat from traffic manager **121** and they therefore reconfigure their responsibilities table to ensure that traffic that would have been handled by traffic manager **121** is evenly redistributed.

Request **507** is then received by router **127.** This is also a request from client **102** and thus would normally have been handled by traffic manager **121.** The request is multicast to traffic managers **120, 122** and **123** and traffic manager **122** determines that it is responsible for the request and sends a reply. Traffic managers **120** and **123** ignore it.

At time t₂, indicated at **508,** traffic manager **122** also fails. Traffic managers **120** and **123** reconfigure their responsibilities table, and thus when request **509** is received from client **102,** it is handled by traffic manager **120.** At time t₃, indicated at **510,** traffic manager **121** comes back online. It resumes its responsibilities and also takes from traffic managers **120** and **123** a share of the traffic normally handled by traffic manager **122.** Thus when request **511** is received from client **102** by router **127,** it is multicast to traffic managers **120, 121** and **123.** Traffic manager **121** is responsible for it and thus sends a reply.

At time t₄, indicated at **512,** traffic manager **123** comes back online. It takes back its responsibilities from the other traffic manages and each of the responsibilities tables looks identical to how it did at time t₀. Thus, when request **513** arrives from client **102** it is handled by traffic manager **121.**

### Figure 6

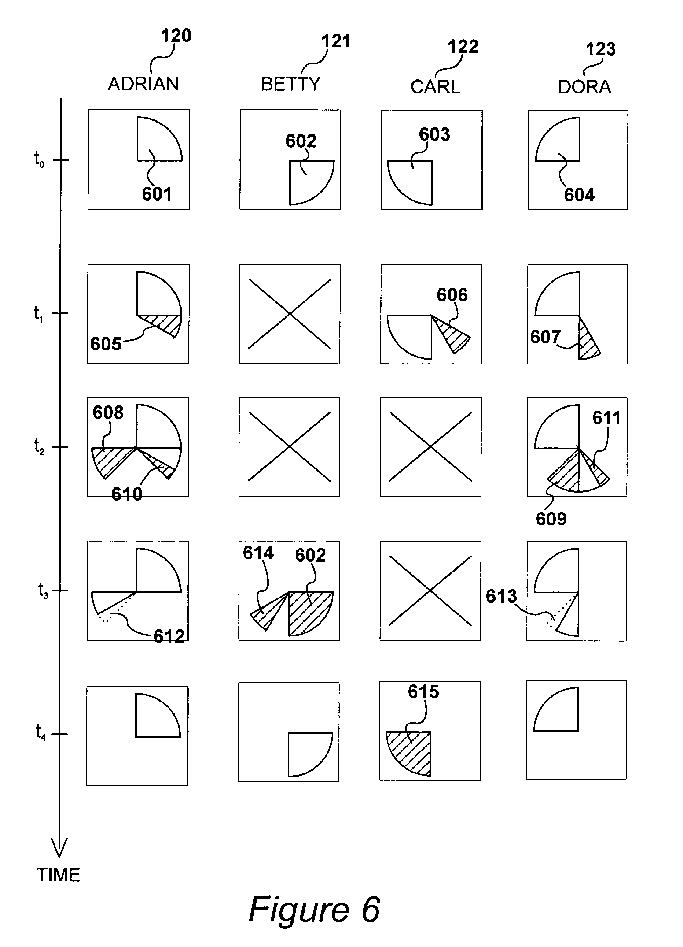

An illustration of how the responsibility for traffic is distributed between the traffic managers is shown in *Figure 6*. If the entirety of the traffic at any one time is considered as a circle, then each of the four traffic managers has an equal share of the circle at time t₀. Thus traffic manager **120** has a quarter **601** of the traffic, traffic manager **121** has a quarter **602** of the traffic, traffic manager **122** has a quarter **603** of the traffic, and traffic manager **123** has the last quarter **604** of the traffic.

At time t₁ traffic manager **121** goes offline. Its quarter of the traffic **602** is divided into three and split between the remaining traffic managers. Thus traffic managers **120, 122** and **123** each take on portions **605, 606** and **607** respectively. Their original quarters remain unchanged.

At time t₂ traffic manager **122** also fails. Its traffic is therefore shared evenly between traffic managers **120** and **123.** It original quarter **603** splits evenly as portions **608** and **609,** and the portion **606** of the traffic taken from traffic manager **121** is split equally as portions **610** and **611.** The traffic already handled by traffic managers **120** and **123,** including portions **605** and **607** taken from traffic manager **121,** is not redistributed.

At time t₃ traffic manager **121** comes back online. It takes back its original quarter of the traffic **602.** It also takes a share of traffic manager **122**'s quarter. Thus, portions **612** and **613** are taken from traffic managers **120** and **123** respectively to form portion **614.** As little as possible of the traffic handled by traffic managers **120** and **123** is therefore redistributed.

At time t₄ traffic manager **122** comes back online. It takes back its traffic that has been distributed between traffic managers **120, 121** and **123** as portion **615.** The network configuration at time t₄ is now identical to how it was at time t₀.

It will be noted that had traffic managers **121** and **122** failed in reverse order, the effect of which can be seen by viewing the timeline backwards from time t₄, the responsibilities would have been distributed in the same way by time t₂. Thus the present invention provides a system in which computers decide independently and identically what the responsibilities are of each of its peers on the network. For example, if two computers failed at substantially the same time, it would be necessary in many prior art systems for the remaining computers to negotiate about the order in which the offline computers failed, in order to ensure that responsibilities are distributed evenly. However, the present invention requires no negotiation between traffic managers.

Furthermore, when a traffic manager goes offline, its responsibilities are redistributed between the remaining traffic managers, but the responsibilities already held by these remaining traffic managers are not changed. This is important because if responsibilities change while a series of client requests are being processed, communication can be lost, leading to annoyance on the part of the client. When a traffic manager comes back online, clearly responsibilities must be removed from an online traffic manager, but the amount of traffic redistributed is minimised.

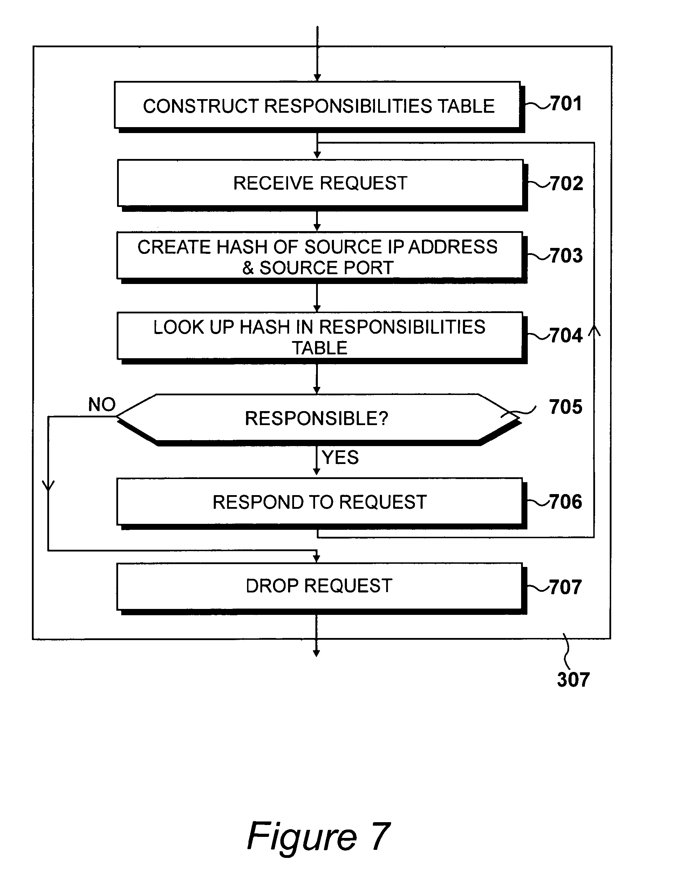

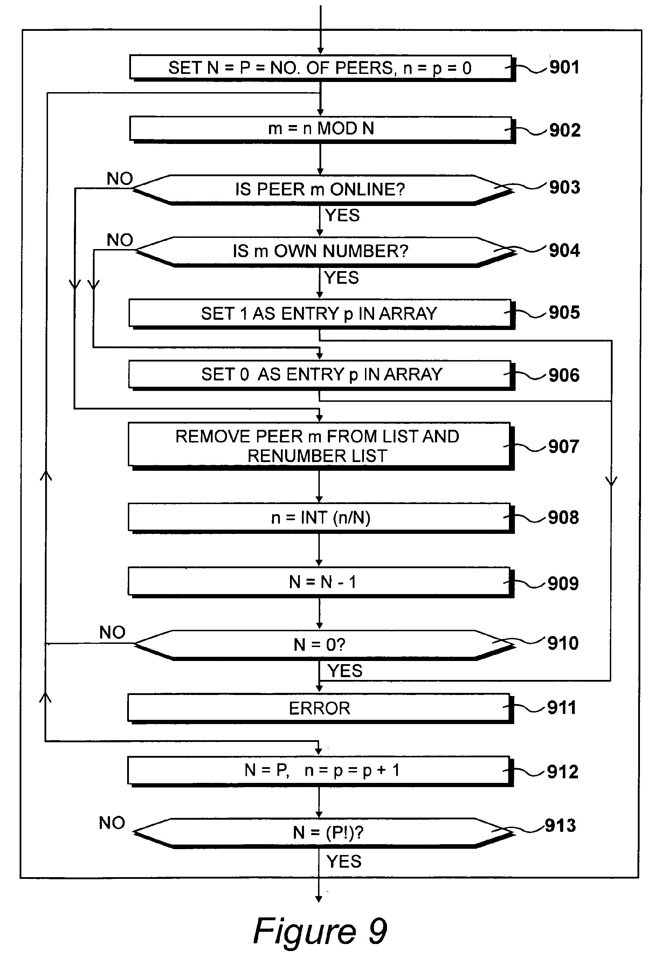

This invention is implemented by an algorithm described with respect to *Figures 7* and *9*.

### Figure 7

*Figure 7* details step **307** carried out by traffic manager **120,** and identically by each of the other traffic managers.

At step **701** responsibilities table **403** is constructed and at step **702** a request is received from router **127.** At step **703** a hash is created of the source IP address and, optionally, the source port of the request, and at step **704** this hash is looked up in responsibilities table **403.**

At step **705** a question is asked as to whether traffic manager **120** is responsible for requests having this hash, as shown in responsibilities table **403,** and if this question is answered in the affirmative then the request is responded to at step **706.** Alternatively, the request is dropped at step **707.**

### Figure 8

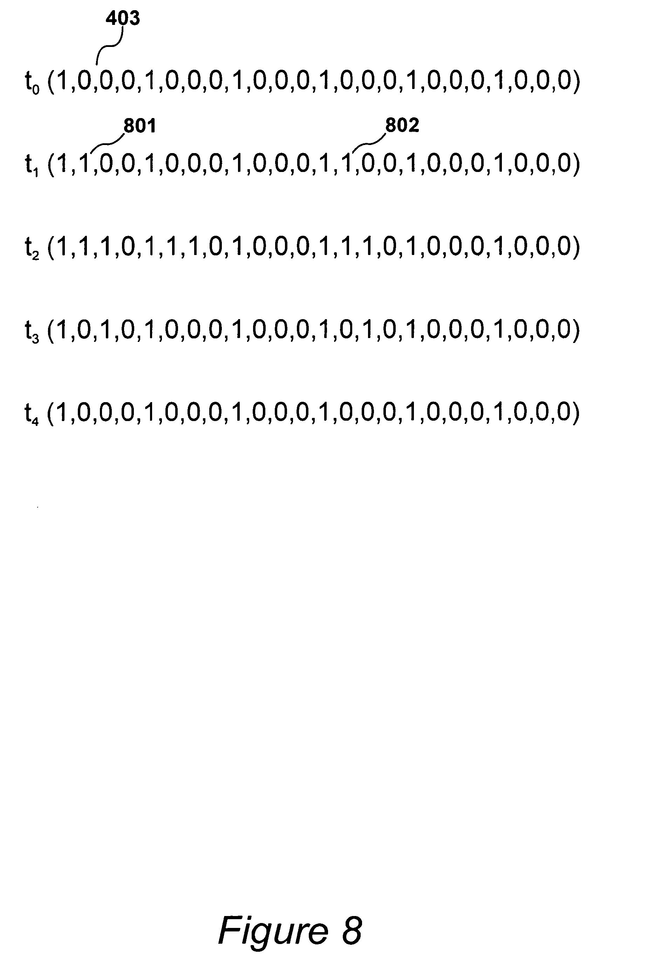

*Figure 8* illustrates responsibilities table **403** held by traffic manager **120** during the various changes of responsibilities illustrated in *Figure 6*. The responsibilities table **403** is a bit array having dimension *N*!, where *N* is the number of peers in the network. Thus in this example the array has 4! = 24 entries. Six of these entries are 1 and eighteen are 0. The hash function used at step **703** creates an integer between 0 and 23. Thus the traffic is split into twenty-four "buckets" and each request falls into one of these buckets depending on its hash. As shown in responsibilities table **403,** at time t₀ traffic manager **120** is responsible for buckets 0, 4, 8, 12, 16 and 20.

The hash function used in this embodiment is the Jenkins Hash which reduces the IP address and the source port to an integer. This integer is then reduced to a number between 0 and *N*!-1 (23 in this example) using reduction modulo *N*!. Other hash functions could be used, and in other embodiments only the IP address is used to make the hash. Other attributes of the request could also be hashed. The advantage of using a hash is that it maps a wide range of values, such as the IP address, to a set number of buckets evenly and deterministically, with no statistical affinity between original values that are adjacent to each other. Thus no matter how unevenly spread IP addresses are, the hash always distributes traffic evenly over the buckets. The task then is to ensure that the buckets are evenly distributed over the traffic managers.

At time t₁ traffic manager **121** goes offline and its six buckets are distributed evenly between the three remaining traffic managers, thus giving each of the traffic managers a further two buckets. Thus, traffic manager **120** is now responsible for buckets 1, indicated at **801,** and thirteen 13, indicated at **802.** Its existing buckets have not changed.

At time t₂, when traffic manager **122** also goes offline, its eight buckets are split between the remaining two traffic managers. Thus traffic manager **120** becomes responsible for buckets 2, 5, 6 and 14.

At time t₃ when traffic manager **121** comes back online, it takes back its existing buckets plus a share of the offline traffic manager **122**'s buckets. Thus, in addition to its own buckets traffic manager **120** now only has buckets 2 and 14. At time t₄ traffic manager **122** comes back online and takes these buckets back.

By using *N*! buckets, the invention described herein ensures that an offline traffic manager's load can always be distributed evenly between the remaining traffic managers.

### Figure 9

Steps carried out at step **703** to create responsibilities table **403** are detailed in *Figure 9*. At step **901** a variable *N* and a variable *P* are set to be the number of peers in the network, irrespective of how many are online, while iterative variables *n* and *p* are set to zero. At step **902** a variable *m* is set to be *n* modulo *N*. At step **903** the list of peers **504** is consulted to determine which traffic manager is at position *m* in the list, and the question is asked as to whether this traffic manager is online. If this question is answered in the affirmative then a further question is asked as to whether this peer is the traffic manager itself and if this question is answered in the affirmative then at step **905** the entry at position *p* in responsibilities table **403** is set to be 1. If it is answered in the affirmative then the entry is set to 0 at step **906.** Thus if all the traffic managers are online, then all the buckets with numbers that are congruent modulo *N* are allocated to the same traffic manager.

However, if the question asked at step **903** is answered in the negative, to the effect that the peer with number *m* is offline, then at step **907** this peer is removed from the list to create a new, renumbered list. At step **908** the variable *n* is set to be the integer part of the division of *n* by *N*. This has the effect of renumbering the buckets that should be handled by the offline traffic manager from 0 to (*N*-1)!. Therefore at step **909** *N* is decremented by 1, and after checking at step **910** that *N* is not equal to zero control is returned to step **902** where a new value of *m* is calculated for the new values of *n* and *N*.

This value is then checked against the new, renumbered list. If the peer it indicates is also offline, then the process is reiterated. Eventually, either *N* will equal zero, in which case all the traffic managers have failed and an error is thrown at step **911,** or the bucket will be allocated to an online peer. Following this, at step **912** N is reset to be *P*, *p* is incremented by one, and *n* is set to this new value of p. At step **913** a question is asked as to whether *n* is now equal to *P*!. If this question is answered in the negative then control is returned to step **902** and the process of deciding which traffic manager has responsibility for the next bucket is started. Alternatively, all the buckets have been considered and the responsibilities table has been constructed.

The algorithm described with respect to *Figure 9* can be carried out on the hash of every request that comes in to determine responsibility on a request-by-request basis, rather than to produce a responsibilities table. This will generally not be more efficient. However, with a large number of traffic managers a bit array of size *N*! will become sparse and slow. A lookup tree may be the solution, but when there are many traffic managers it may become quicker to perform the algorithm every time.

Redundant or spare computers can be incorporated into the system described herein. For example, a service provider may only have enough traffic for two traffic managers but wish to have three or even four for the purposes of reliability. It is more efficient, in terms of power and time, to only run two traffic managers in this situation and mark the other two as passive. This means that they are not considered to be online peers when the responsibilities table is constructed. The algorithm still, however, uses an initial value of four peers and constructs a responsibilities table of size twenty-four. Should one of the active machines go offline, one or more of the passive machines goes online and takes its place in the algorithm.

In an alternative embodiment of this invention, the traffic managers can be weighted. If one of the computers is considerably more powerful than the others, it may be preferable for it to always handle more traffic. This can be done by considering the powerful computer to have two places in the list of computers, thus increasing the total number of computers by one more than is actually there. However, this also increases the size of the responsibilities table, which may become sparse and inefficient.

An alternative implementation is as follows. The algorithm described above can be considered as a method for selecting one of the N! permutations of the set of traffic managers, and selecting the first working traffic manager from that permutation. The algorithm can be weighted by assigning more hash values to one permutation than another. Each traffic manager is assigned a weight, and for a given permutation, a list of weights w₀, w₁, ... , w_{N-1} can be created by ordering the traffic manager weights in accordance with the order of the permutation. For example, if the weights of traffic managers A, B, C and D were w_{A}, w_{B}, w_{C}, w_{D} then for the permutation (C, B, A, D) the list of weights would be w₀ = w_{C}, w₁ = w_{B}, w₂ = w_{A}, and w₄ = w_{D}.

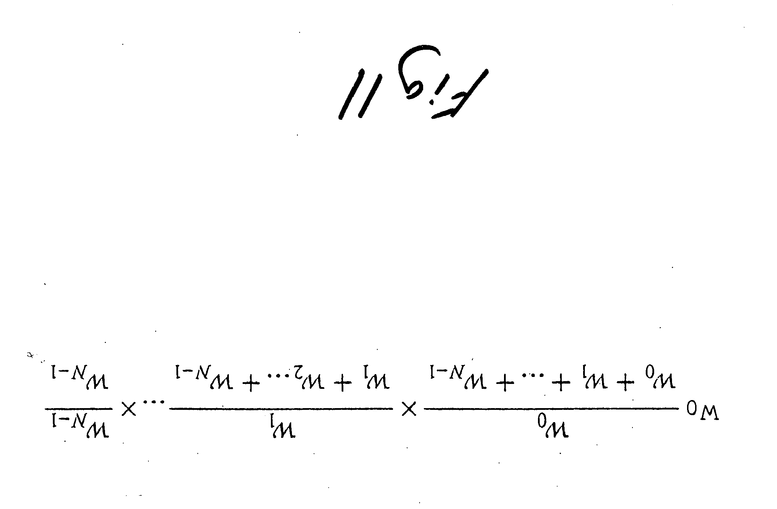

The weight for a permutation is illustrated in Figure 11.

The *N*! different permutation weights sum to 1. They are ordered in the same order as the N! permutations that are generated by the algorithm above. The hash is mapped to a value between 0 and 1 (for example by dividing by the size of the hash space) and the weights are considered cumulatively until the sum of the weights is higher than the mapped value. The last weight to be added indicates the permutation to use for that hash.

### Figure 10

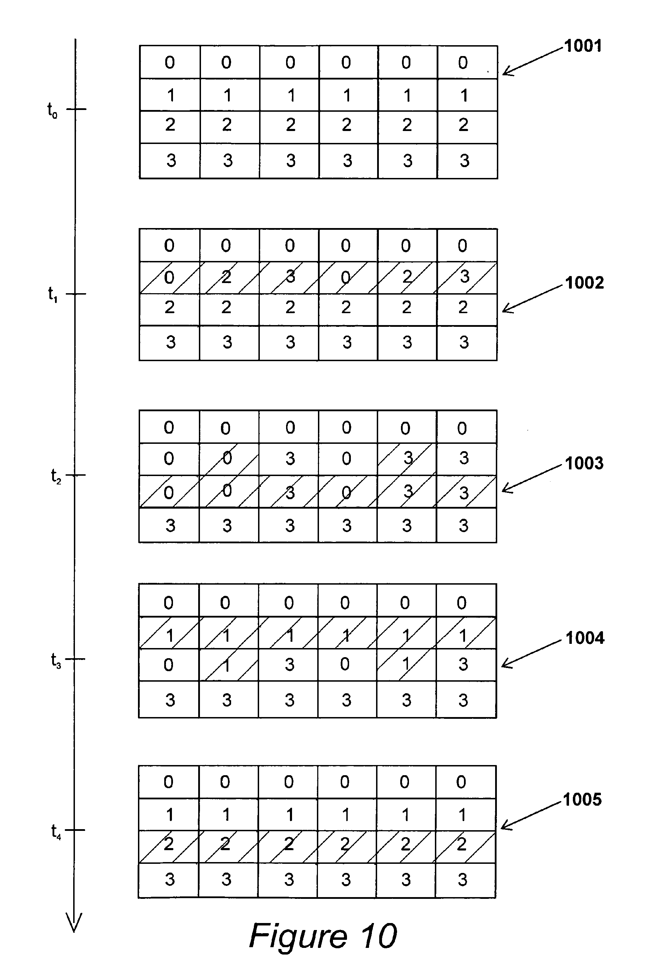

*Figure 10* illustrates the allocation of buckets performed by the algorithm described with respect to *Figure 9*. Although the algorithm actually results in the production of a bit array as shown in *Figure 8*, the illustration in *Figure 10* shows the allocation to each active traffic manager. The twenty-four buckets are set out at **1001** in a 4 x 6 array. Buckets 0 to 3 are in the first column, buckets 4 to 7 are in the second column, and so on. Thus it can be seen that at t₀ the traffic manager at position 0 in the list, traffic manager **120** named Adrian, is responsible for buckets 0, 4, 8, 12, 16 and 20. The traffic manager numbered 1 in the list, traffic manager **121** named Betty, is responsible for buckets 1, 5, 9, 13, 17 and 21. Traffic manager **122,** named Carl, is responsible for buckets 2, 6, 10, 14, 18 and 22, while traffic manager **123,** named Dora, is responsible for buckets 3, 7, 11, 15, 19 and 23.

At time t₁ when traffic manager **121** (Betty) goes offline, it can be seen that its six buckets are reallocated between the three remaining traffic managers. Thus traffic manager **121** takes buckets 1 and 13, traffic manager **122** takes buckets 5 and 17, while traffic manager **123** takes buckets 9 and 21. For example, when considering bucket 1:
13 mod 4 = 1
Traffic manager 1 in the list (A, B, C, D) is B
B is offline
   Int(13/4) mod 3 = 0
   Traffic manager 0 in the list (A, C, D) is A

At time t₂ traffic manager **122** (Carl) goes offline and the array **1003** shows that its eight buckets are redistributed between traffic managers **120** and **123,** without changing the buckets that these traffic managers are already responsible for.

At time t₃ traffic manager **121** comes back online and as shown at array **1004** takes back its original six buckets. It also takes bucket 6 from traffic manager **120** and 18 from traffic manager **123,** and each traffic manager now has eight buckets again. At time t₄ traffic manager **123** comes back online and as shown at array **1005** takes back its original six buckets.

## Claims

1. A method of distributing network traffic between a plurality of networked computers, wherein:
said traffic comprises requests that are received into said network and replicated to each computer, and
for each request, each computer makes a decision based on attributes of said request as to whether to process or ignore the request, such that each request is processed by only one computer; comprising the steps of:
periodically broadcasting a signal to each of the other computers to confirm that it is online;
determining a condition to the effect that a first computer is no longer online; and
redistributing said traffic amongst the remaining online computers, wherein:
traffic that is already processed by said remaining computers is not redistributed;
traffic that would have been processed by said first computer is split evenly between said remaining computers; and
each computer decides independently and identically how to redistribute said traffic without communicating with the other computers.

2. A method according to claim **1,** wherein each said computer makes a decision about whether to process or ignore said request by creating a hash of attributes of said request and determining whether it is responsible for requests having that hash.

3. A method according to claim **2,** wherein for any value of said hash, said computer establishes whether it is responsible for requests having that hash by:
(a) creating a first list of said networked computers, said first list being ordered and numbered;
(b) calculating a first variable by taking the modulus of the hash with respect to the number of computers in said list;
(c) identifying the computer at the position in the list indicated by said first variable; and
(d) if said identified computer is said computer, establishing that it is responsible for requests having said hash.

4. A method according to claim **3,** further comprising the steps of:
determining that said identified computer is offline;
removing said identified computer from said list to create a second list and numbering said list;
calculating a modified hash by dividing said hash by said number of computers in said first list; and
performing steps (b) and (c) of claim **3** again, replacing said first list with said second list and said hash with said modified hash; and
if said identified computer is said computer, establishing that it is responsible for requests having the unmodified hash.

5. A method according to any of claims **2** to **4,** wherein each of said computers calculates a responsibilities table by determining whether it is responsible for requests having each possible hash value, and each computer consults said responsibilities table to determine whether it is responsible for each request.

6. A method according to any of claims **1** to **5,** wherein at least one of said computers is passive and is considered to be offline unless one of the other computers goes offline.

7. A method according to any of claims **1** to **6,** wherein each of said computers is a traffic manager, a plurality of servers are connected to said network, and each traffic manager is configured to route requests to one of said servers.

8. A traffic manager for processing requests received over a network, comprising a processor, memory and communication means, wherein said processor is configured to:
maintain communication with a plurality of similar traffic managers via said communication means;
receive a request via said communication means;
determine, based on attributes of said request, whether to process or ignore the request;
determine a condition to the effect that a first traffic manager is no longer online; and
allocate to itself a portion of the traffic handled by said first traffic manager without transferring any traffic that it already handles to other traffic managers, and without negotiating with said other traffic managers.

9. A traffic manager according to claim **8,** wherein said processor is configured to determine whether to process or ignore said request by creating a hash of attributes of said request and determining whether it is responsible for requests having that hash.

10. A traffic manager according to claim **9,** wherein for any value of said hash, said processor is configured to establish whether it is responsible for requests having that hash by:
(a) creating a first list of said traffic managers, said first list being ordered and numbered;
(b) calculating a first variable by taking the modulus of the hash with respect to the number of computers in said list;
(c) identifying the traffic manager at the position in the list indicated by said first variable; and
(d) if said identified traffic manager is said traffic manager, establishing that it is responsible for requests having said hash.

11. A traffic manager according to claim **10,** further comprising the steps of:
determining that said identified traffic manager is offline;
removing said identified traffic manager from said list to create a second list and numbering said list;
calculating a modified hash by dividing said hash by said number of traffic managers in said first list; and
performing steps (b) and (c) of claim **10** again, replacing said first list with said second list and said hash with said modified hash; and
if said identified traffic manager is said traffic manager, establishing that it is responsible for requests having the unmodified hash.

12. A traffic manager according to any of claims **9** to **11,** wherein said processor is further configured to calculate a responsibilities table by determining whether it is responsible for requests having each possible hash value, and to consult said responsibilities table to determine whether it is responsible for each request.

13. A traffic manager according to any of claims **8** to **12,** wherein said traffic manager is further networked to a plurality of servers, and said processor is further configured to route requests to one of said servers.

14. A computer-readable medium having computer-readable instructions executable by a computer such that, when executing said instructions, a computer will perform the steps of:
maintaining communication with a plurality of similar computers via said communication means;
receive a request via said communication means;
determine, based on attributes of said request, whether to process or ignore the request;
determine a condition to the effect that a first computer is no longer online; and
allocate to itself a portion of the traffic handled by said first computer without transferring any traffic that it already handles to other computers, and without negotiating with said other computers.

15. Instructions executable by a computer or by a network of computers such that when executing said instructions said computer(s) will perform a method as defined by claim **1.**

16. A computer system programmed to execute program instructions according to claim **15.**
